# EUROPEAN PATENT APPLICATION

(11) **EP 3 388 227 A1**
(43) Date of publication of application: **17.10.2018**
(21) Application number: 17166442.8
(22) Date of filing: 13.04.2017
(51) Int. Cl.: B30B 11/00, B22F 3/03, B22F 5/10, B23B 27/14, B30B 15/02

(54) **COMPACTING DEVICE AND METHOD FOR PRODUCING A CUTTING INSERT GREEN BODY BY COMPACTING A POWDER**

(71) Applicant: Seco Tools AB, 737 82 Fagersta (SE)
(72) Inventor: STERKENBURG, Dirk, 78395 Gustafs (SE); SJÖLIND, Magnus, 737 30 Fagersta (SE)
(74) Representative: Sandvik

(57) **Abstract**

Compacting device and method for producing a cutting insert green body by compacting a powder, wherein a die (30) contributes to defining a die cavity (23) that defines the shape of the green body to be formed, the die comprising:
- an upper die part (31) defining an upper part of said die cavity together with an upper punch (21);
- a lower die part (33) defining a lower part of said die cavity together with a lower punch (22); and
- intermediary die members (35a, 35b) which are moveable in a plane perpendicular to a pressing axis (x₂) and which define an intermediary part of the die cavity.

The intermediary part of the die cavity defines an undercut portion which extends circumferentially around the green body to be formed and which comprises three or more peripheral indexing grooves in the green body.

## Description

### FIELD OF THE INVENTION AND PRIOR ART

The present invention relates to a compacting device according to the preamble of claim 1 and a method according to the preamble of claim 13 for producing a cutting insert green body by compacting a powder.

The invention relates to the technical field in which cutting inserts, for instance to be used for the machining of metal by chip forming methods in the form of milling, drilling, turning or the similar, are produced from a powder which is compacted into a green body, which in its turn is subjected to a sintering process. Normally, the sintered body is then provided with a suitable wear resistant coating by means of any suitable coating technique, such as for instance physical or chemical vapour deposition.

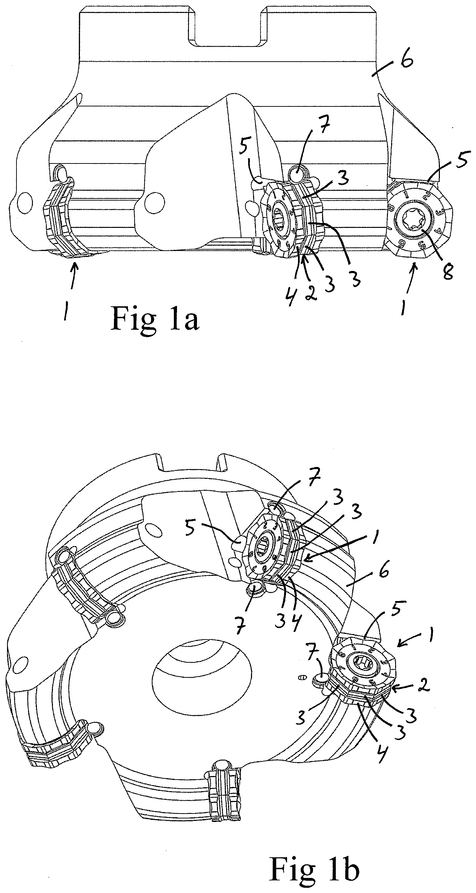

One known type of cutting insert 1 (see Figs 1 a and 1b) has an undercut portion 2 which extends circumferentially around a middle part of the cutting insert and which consists of several mutually connected and straight indexing grooves 3 formed in the outer peripheral wall 4 of the cutting insert. Cutting inserts 1 of this type arranged in dedicated pockets 5 of a milling cutter 6 are illustrated in Figs 1a and 1b, wherein each pocket 5 is provided with indexing members 7 in the form of cylindrical pins or the similar or fixed protrusions, wherein each indexing member 7 is received in an indexing groove 3 of a cutting insert 1 in order to make sure that the cutting insert is correctly and stably positioned in the pocket. Each cutting insert 1 is fixed to the milling cutter 6 by means of a fastening member 8 in the form of a screw, which extends through a centre hole in the cutting insert. As an alternative, the cutting inserts 1 may be fixed to the milling cutter 6 by means of one or more clamps. Numbers on the end faces of each cutting insert 1 represent different cutting edges of the cutting insert. When a cutting edge on a cutting insert 1 of this type has been worn out or is about to be worn out, the cutting insert may be released from the associated pocket 5 and then remounted in the pocket in a new indexing position in order to have a new cutting edge of the cutting insert positioned in the active cutting position.

In a conventional manufacturing method for producing a cutting insert 1 with an undercut portion 2 of the above-mentioned type, a cutting insert green body is first produced by compacting a powder, whereupon the green body is sintered. The sintered green body is then machined, for instance by grinding, in order to form the indexing grooves 3 and thereby the undercut portion 2. Such machining constitutes a rather expensive manufacturing step. In order to save costs, a formation of the undercut portion 2 by direct pressing during the production of the green body, i.e. when compacting the powder, is therefore desirable.

JPH 1094899 A discloses a method for producing a cutting insert green body by powder compacting, where a split die is used in order to achieve an undercut portion in the outer peripheral wall of the green body.

### SUMMARY OF THE INVENTION

The object of the present invention is to achieve a new and favourable manner of producing a cutting insert green body to be used for manufacturing a cutting insert of the above-mentioned type, i.e. a cutting insert with an undercut portion which extends circumferentially around a middle part of the cutting insert and which comprises three or more indexing grooves formed in the outer peripheral wall of the cutting insert.

According to the invention, this object is achieved by means of a compacting device having the features defined in claim 1.

The compacting device of the present invention comprises at least one upper punch, at least one lower punch and a die configured to contribute to defining a die cavity that defines the shape of the green body to be formed, the die comprising:
- an upper die part, which is configured to define an upper part of said die cavity together with the upper punch and which is provided with a bore for receiving the upper punch, wherein the upper punch is moveable through the bore in the upper die part so as to be moveable in relation to the upper die part along a pressing axis;
- a lower die part, which is configured to define a lower part of said die cavity together with the lower punch and which is provided with a bore for receiving the lower punch, wherein the lower punch is moveable through the bore in the lower die part so as to be moveable in relation to the lower die part in the direction of the pressing axis; and
- two or more intermediary die members which are transversally moveable in relation to each other and in relation to the upper and lower die parts in a plane perpendicular to the pressing axis between an advanced position, in which the intermediary die members together define an intermediary part of the die cavity, and a retracted position, in which the intermediary die members are withdrawn from the die cavity.
The intermediary part of the die cavity defined by the intermediary die members is located between said upper and lower parts of the, wherein this intermediary part of the is configured to define the shape of an undercut portion which extends circumferentially around a middle part of the green body to be formed and which comprises three or more peripheral indexing grooves in the green body to be formed.

With the solution according to the present invention, the desired undercut portion at the middle part of the cutting insert is achieved directly in the compacting process without requiring the use of large split-die parts of the type illustrated in JPH 1094899 A. On the contrary, the undercut portion can be achieved by means of rather small intermediary die members positioned between upper and lower die parts. The interfaces between the large split-die parts of the type illustrated in JPH 1094899 A consist of relatively large contact surfaces on the split-die parts. With larger contact surfaces, there is an increased risk for unwanted powder contamination on the contact surfaces. It is also more difficult and expensive to produce split-die parts with larger forming surfaces within the required tolerances. Thus, the smaller intermediary die members included in the compacting device according to the present invention are less sensitive to powder contamination on the contact surfaces at the interfaces between the die members and can also be produced in a more simple and cost-efficient manner than larger split-die parts. Furthermore, less force is required for keeping the smaller intermediate die members in the advanced position during the compacting of the powder as compared to larger split-die parts.

The intermediary die members included in the compacting device according to the present invention nowhere extend above or below the outer peripheral wall of the cutting insert green body to be formed, and the upper and lower edges of these intermediary die members will consequently cause circumferential split line press burrs on the outer peripheral wall of the cutting insert green body, in contrast to the larger split-die parts of the type illustrated in JPH 1094899 A which cover the outer peripheral wall of the cutting insert green body to be formed. Thus, the smaller intermediary die members included in the compacting device according to the present invention will cause more split line press burrs on the outer peripheral wall of the cutting insert green body than the larger split-die parts of the type illustrated in JPH 1094899 A. In general, these additional split line press burrs are not favourable with respect to the quality and performance of the cutting insert, but in this case such additional split line press burrs have no influence on the quality and performance of the cutting insert and can therefore be accepted. When it comes to the split line press burrs, a positive effect with the smaller intermediary die members included in the compacting device according to the present invention is that they will not cause any vertical split line press burrs extending all the way up to the upper edge or down to the lower edge on the green body, in contrast to the larger split-die parts of the type illustrated in JPH 1094899 A which will cause longer vertical split line press burrs extending all the way between the upper and lower edges of the green body. The shorter vertical split line press burrs caused by the intermediary die members included in the compacting device according to the present invention are consequently not reaching the upper and lower edges of the green body and will therefore not have any negative influence on the cutting edges of the cutting insert formed by the green body.

Further advantageous features of the compacting device according to the present invention will appear from the description following below and the dependent claims.

The invention also relates to a method having the features defined in claim 13.

Further advantageous features of the method according to the present invention will appear from the description following below and the dependent claims.

### BRIEF DESCRIPTION OF THE DRAWINGS

With reference to the appended drawings, a specific description of embodiments of the invention cited as examples follows below. In the drawings:
- Figs 1a and 1b: are perspective views from different directions of a milling cutter provided with cutting inserts having indexing grooves,
- Figs 2a and 2b: are perspective views from different directions of a cutting insert green body according to a first variant,
- Fig 2c: is a lateral view of the green body of Figs 2a and 2b,
- Fig 2d: is a cross-sectional view according to the line 2d-2d in Fig 2c,
- Fig 3: is a perspective view of a cutting insert green body according to a second variant,
- Figs 4a and 4b: are perspective views from different directions of a cutting insert green body according to a third variant,
- Fig 4c: is a lateral view of the green body of Figs 4a and 4b,
- Fig 4d: is a cross-sectional view according to the line 4d-4d in Fig 4c,
- Figs 5a-5i: is a series of figures showing succeeding steps in a method according to an embodiment of the present invention for producing a cutting insert green body by means of a compacting device according to a first embodiment of the invention, as seen in a schematic vertical section,
- Fig 6: is a schematic illustration of a die cavity formed by parts included in the compacting device of Figs 5a-5i,
- Fig 7: is a schematic, vertically cut perspective view of the compacting device of Figs 5a-5i,
- Figs 8a: is a perspective view of two intermediary die members included in the compacting device of Figs 5a-5i, as seen in a retracted position,
- Fig 8b: is a perspective view of the intermediary die members of Fig 8a, as seen in an advanced position,
- Figs 9a: is a perspective view of two intermediary die members according to another variant, as seen in a retracted position,
- Fig 9b: is a perspective view of the intermediary die members of Fig 9a, as seen in an advanced position,
- Figs 10a: is a schematic perspective view of parts included in a compacting device according to a second embodiment of the invention, as seen with the intermediary die members of the compacting device in a retracted position,
- Fig 10b: is a schematic perspective view corresponding to Fig 10a, as seen with the intermediary die members in an advanced position,
- Fig 11: is a schematic perspective view of parts included in a compacting device according to a third embodiment of the invention,
- Fig 12: is a schematic, vertically cut perspective view of a die, a lower punch and a core pin included in the compacting device of Fig 11,
- Fig 13a: is a schematic, vertically cut perspective view of the parts shown in Fig 11, as seen with the intermediary die members in an advanced position, and
- Fig 13b: is a schematic, vertically cut perspective view corresponding to Fig 13a, as seen with the intermediary die members in a retracted position.

### DETAILED DESCRIPTION OF EMBODIMENTS OF THE INVENTION

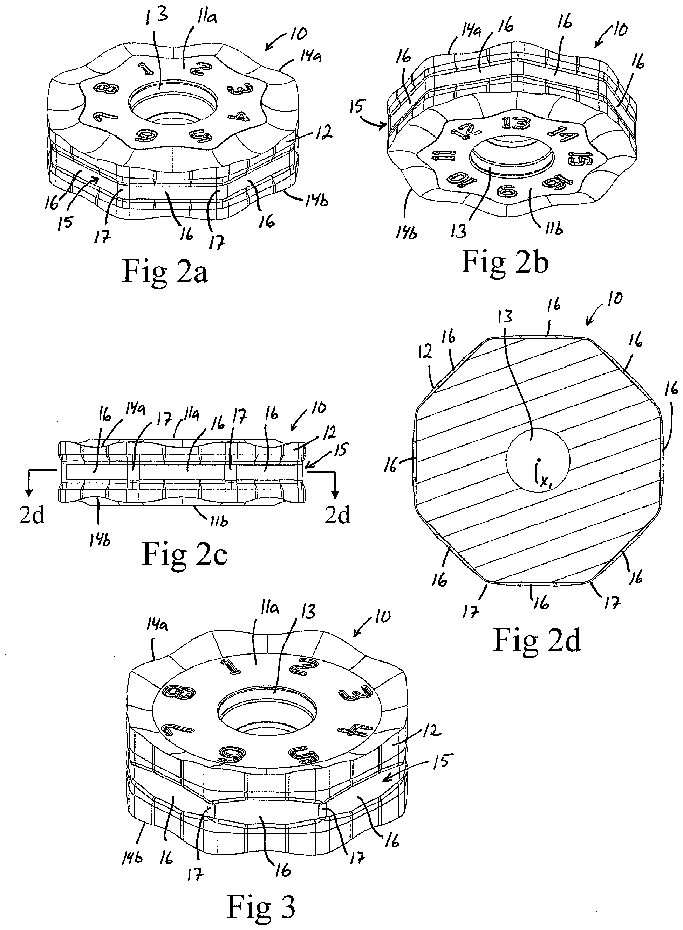

Cutting insert green bodies 10 of different designs which may be produced by means of a compacting device and a method according to the present invention are illustrated in Figs 2-4. Each green body 10 has an upper face 11a, a lower face 11b and an outer peripheral wall 12. A hole 13 extends axially through the green body 10 along the centre axis x₁ thereof, between the upper and lower faces 11a, 11b of the green body. A sharp upper edge 14a between the upper face 11a and the outer peripheral wall 12 forms a first series of cutting edges extending around the upper face, and a sharp lower edge 14b between the lower face 11b and the outer peripheral wall 12 forms a second series of cutting edges extending around the lower face. Numbers provided on the upper and lower faces 11a, 11 b of the green bodies 10 illustrated in Figs 2a-2d and Fig 3 indicate the positions of different sections along the upper and lower edges 14a, 14b, wherein each such section constitutes an individual cutting edge.

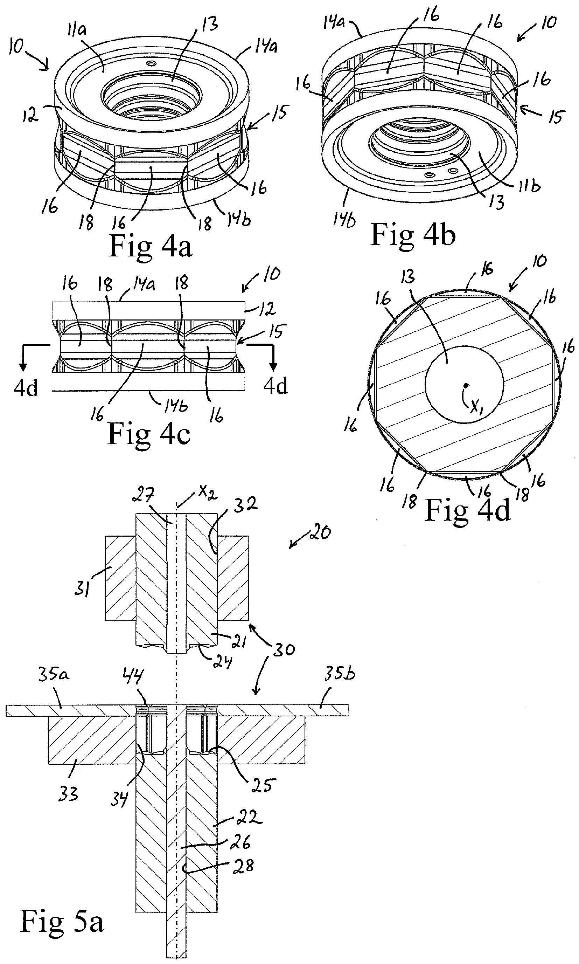

An undercut portion 15 is provided in the outer peripheral wall 12 of the green body 10 and extends circumferentially and continuously around a middle part of the green body 10. The undercut portion 15 forms a waist on the green body 10 and comprises several mutually connected indexing grooves 16 formed in the outer peripheral wall 12 of the green body 10. The indexing grooves 16 of the illustrated green bodies 10 are straight, or at least essentially straight, as seen in a plane perpendicular to the centre axis x₁ of the green body, wherein the undercut portion 15 has a polygonal cross-sectional shape as seen in a plane perpendicular to the centre axis x₁ of the green body, as illustrated in Figs 2d and 4d. The illustrated green bodies 10 are provided with eight indexing grooves 16, but the indexing grooves may be of any suitable number from three and upwards. The indexing grooves 16 are used in order to define the positions of the above-mentioned different sections along the upper and lower edges 14a, 14b when the cutting insert formed by the green body 10 is mounted to a machining tool, as explained above with reference to Figs 1 a and 1 b.

In the green bodies illustrated in Figs 2a-2d and Fig 3, the indexing grooves 16 meet each other at rounded corners 17. In the green body 10 illustrated in Figs 4a-4d, the indexing grooves 16 meet each other at sharp corners 18. As a further alternative, the indexing grooves 16 may be mutually connected to each other via bevelled intermediate surfaces included in the undercut portion 15.

In the illustrated green bodies 10, the parts of the outer peripheral wall 12 located above and below the undercut portion 15 are parallel with the centre axis x₁ of the green body 10. However, these parts of the outer peripheral wall 12 could as an alternative be slightly inclined in relation to the centre axis x₁ of the green body 10 so that the green body becomes essentially barrel-shaped as seen in a lateral view..

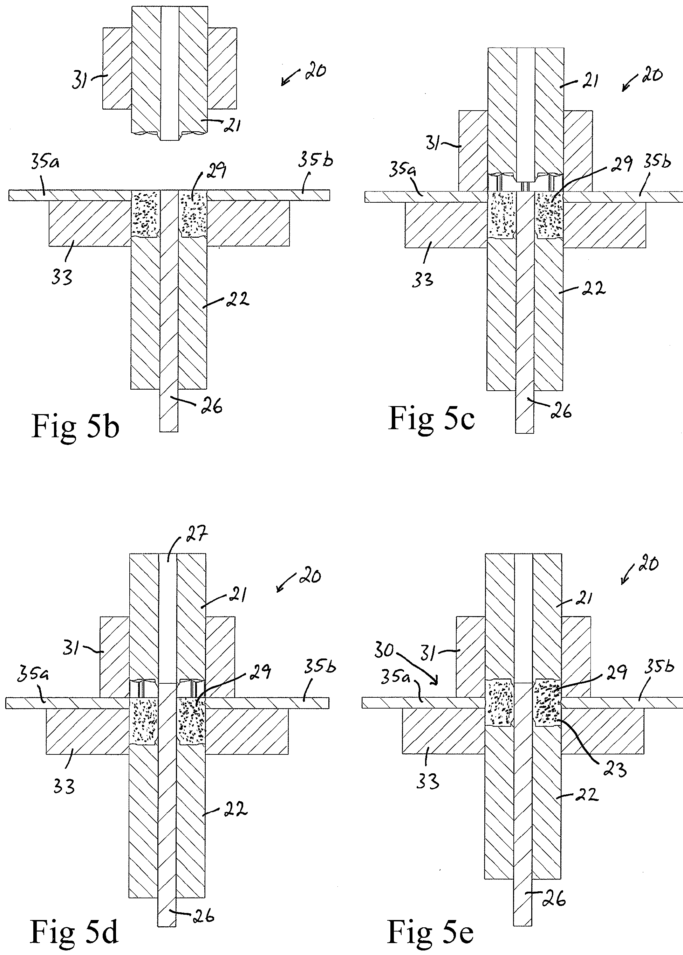

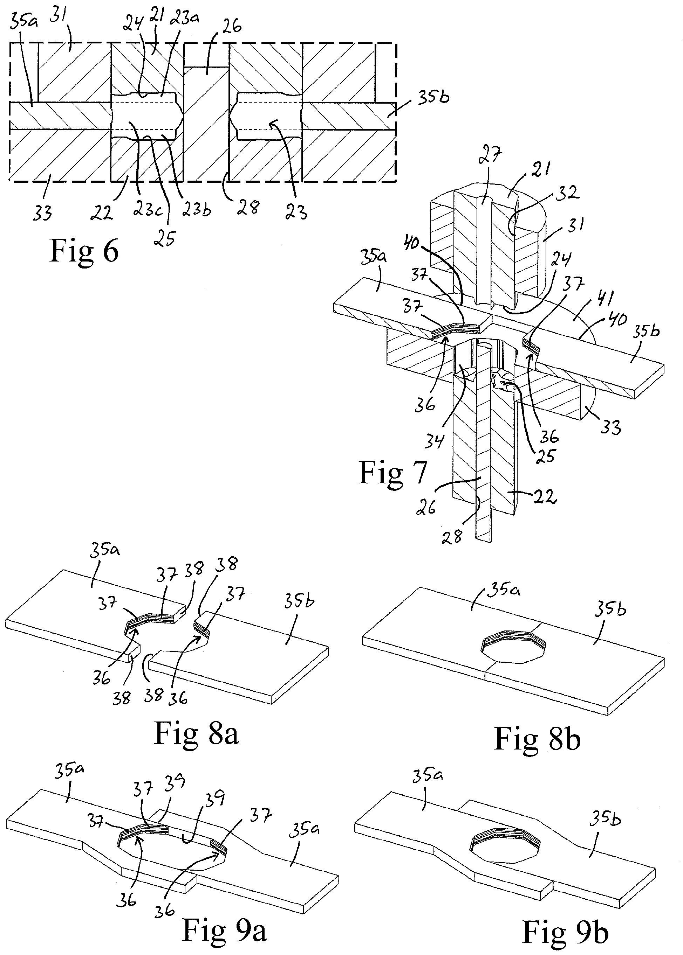

Fig 5a schematically illustrates some of the parts included in a compacting device 20 according to an embodiment of the present invention for producing a green body 10 of the above-mentioned type by compacting a powder. The compacting device 20 comprises an upper punch 21, a lower punch 22 and a die 30 configured to contribute to defining a cavity 23 (see Figs 5e and 6) that defines the shape of the green body 10 to be formed. In this description and the subsequent claims, this cavity 23 is referred to as the die cavity.

The die comprises an upper die part 31, which is configured to define an upper part 23a (see Fig 6) of said die cavity 23 together with the upper punch 21 and which is provided with a bore 32 for receiving the upper punch 21. The die 30 also comprises a lower die part 33, which is configured to define a lower part 23b of said die cavity 23 together with the lower punch 22 and which is provided with a bore 34 for receiving the lower punch 22. The upper part 23a of the die cavity 23 is formed between an inner surface of the upper die part 31 and a lower end surface 24 of the upper punch 21, and the lower part 23b of the die cavity 23 is formed between an inner surface of the lower die part 33 and an upper end surface 25 of the lower punch 22. The upper punch 21 is moveable through the bore 32 in the upper die part 31 so as to be moveable in relation to the upper die part 31 along a pressing axis x₂, and the lower punch 22 is moveable through the bore 34 in the lower die part 33 so as to be moveable in relation to the lower die part 33 in the direction of the pressing axis x₂. The bore 32 in the upper die part 31 has an inner peripheral surface corresponding to the external peripheral surface of the upper punch 21 and the bore 32 will thereby form a guide channel for the upper punch 21. The bore 34 in the lower die part 33 has an inner peripheral surface corresponding to the external peripheral surface of the lower punch 22 and the bore 34 will thereby form a guide channel for the lower punch 22.

The upper and lower punches 21, 22 are in a conventional manner connected to actuators (not shown), by means of which they are individually moveable upwards and downwards in the direction of the pressing axis x₂.

In the embodiment illustrated in Fig 5a, the upper die part 31 is axially moveable in relation to the lower die part 33 in the direction of the pressing axis x₂, whereas the lower die part 33 is a fixed part. In this case, the upper die part 31 is in a conventional manner connected to an actuator (not shown), by means of which it is individually moveable upwards and downwards in the direction of the pressing axis x₂. As an alternative, the lower die part 33 may be axially moveable in the direction of the pressing axis x₂.

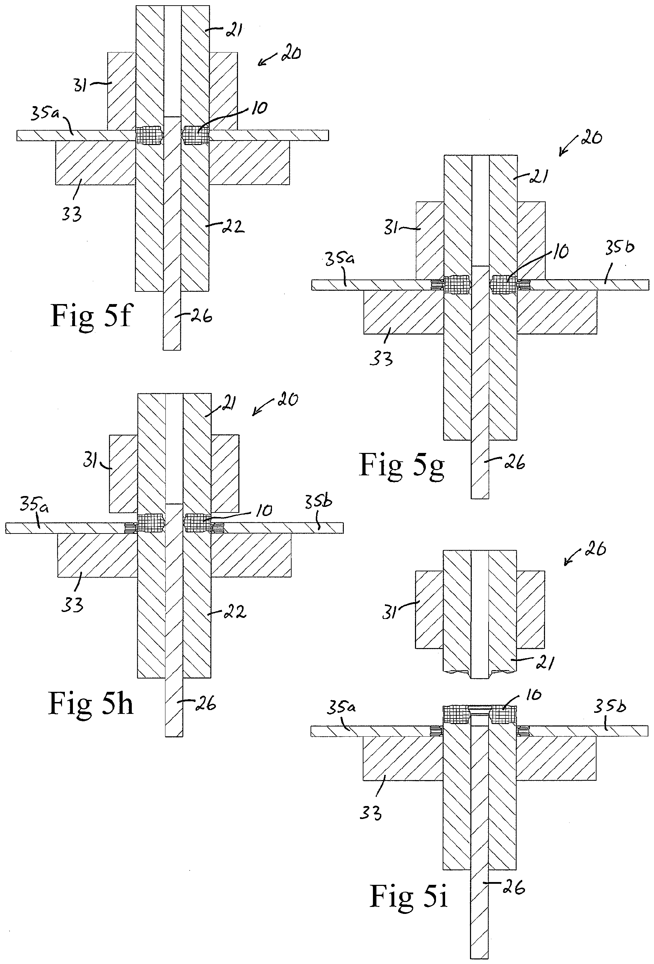

The die 30 also comprises two or more intermediary die members 35a, 35b, which are configured to define an intermediary part 23c (see Fig 6) of the die cavity located between the upper part 23a of the die cavity defined by the upper die part 31 and the upper punch 21 and the lower part 23b of the die cavity defined by the lower die part 33 and the lower punch 22. This intermediary part 23c of the die cavity is configured to define the shape of the above-mentioned undercut portion 15 of the green body 10 to be formed. The intermediary die members 35a, 35b are located between the upper and lower die parts 31, 33 and are transversally moveable in relation to each other and in relation to the upper and lower die parts 31, 33 in a plane perpendicular to the pressing axis x₂ between an advanced position (see Figs 5a-5f, 6, 8b and 9b), in which the intermediary die members 35a, 35b together define said intermediary part 23c of the die cavity 23, and a retracted position (see Figs 5g-5i, 7, 8a and 9a), in which the intermediary die members 35a, 35b are withdrawn from the die cavity 23. The intermediary die members 35a, 35b are connected to actuators (not shown), by means of which they are moveable between the advanced and retracted positions. The intermediary die members 35a, 35b are to be in the advanced position when powder is introduced into a space in the die 30 above the lower punch 22 and when the powder subsequently is compacted between the upper and lower punches 21, 22. The intermediary die members 35a, 35b are to be in the retracted position when the green body 10 formed by the compaction of the powder is to be removed from the die 30. The intermediary die members 35a, 35b are preferably plate-shaped.

Each intermediary die member 35a, 35b has an inner face 36 (see Figs 7-9b) facing the pressing axis x₂, wherein this inner face 36 consists of one or more face sections 37, each of which defining the shape of one of the above-mentioned indexing grooves 16 in the green body 10 to be formed. In the illustrated examples, each face section 37 extends along a straight line, or at least essentially straight line, as seen in a plane perpendicular to the pressing axis x₂. The inner faces 36 of the intermediary die members 35a, 35b together define the intermediary part 23c of the die cavity 23 when the intermediary die members 35a, 35b are in the advanced position. The inner face 36 of each intermediary die member 35a, 35b has a height which is smaller than the smallest height of the outer peripheral wall 12 of the green body 10 to be formed.

In the embodiments illustrated in Figs 8a-9b, there are two intermediary die members 35a, 35b, which are located opposite each other on opposite sides of the pressing axis x₂. Each one of the intermediary die members 35a, 35b illustrated in Figs 8a-9b has an inner face 36 consisting of four face sections 37 of the above-mentioned type. Thus, these intermediary die members 35a, 35b are to be used for producing a green body with an undercut portion 15 having eight indexing grooves 16.

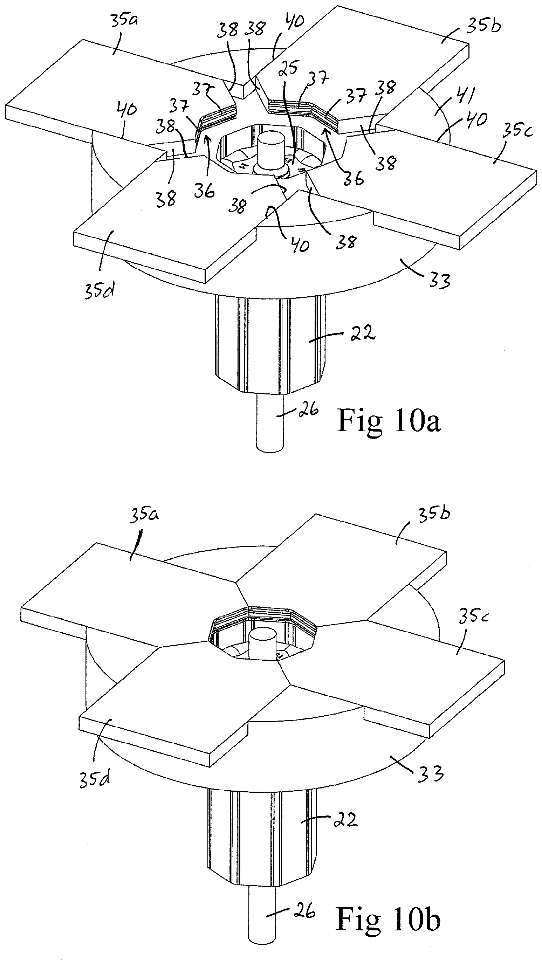

In the embodiment illustrated in Figs 10a and 10b, the die comprises four intermediary die members 35a-35d, each of which having an inner face 36 consisting of two face sections 37 of the above-mentioned type. Thus, also these intermediary die members 35a-35d are to be used for producing a green body with an undercut portion 15 having eight indexing grooves 16.

The number of intermediary die members 35a-35d and the number of face sections 37 on each intermediary die member may of course be adapted in any suitable manner in order to achieve the required number of indexing grooves 16 on the green body 10 to be produced.

In the embodiment illustrated in Figs 8a and 8b and in the embodiment illustrated in Figs 10a and 10b, the intermediary die members 35a-35d are provided with mutual contact surfaces 38, which are in contact with each other when the intermediary die members are in the advanced position and which are separated from each other when the intermediary die members are in the retracted position. Thus, in these embodiments, the intermediary die members 35a-35d are configured to abut against each other in the advanced position and to be parted from each other in the retracted position. As an alternative, there might be a very small gap, for instance in the order of about 0.01 mm, at the interfaces between the intermediary die members when they are in the advanced position.

In the embodiment illustrated in Figs 9a and 9b, the intermediary die members 35a, 35b are provided with mutual contact surfaces 39 which are in sliding contact with each other during the movement of the intermediary die members between the advanced and retracted positions. In this case, the final movement of the intermediary die members 35a, 35b to the advanced position may be performed directly after the filling of powder into the space between the intermediary die members 35a, 35b or just before the punches 21, 22 reach the final press position.

In the embodiment illustrated in Figs 5a-5i and 7and in the embodiment illustrated in Figs 10a and 10b, the intermediary die members 35a-35d are slidably received in a respective guide groove 40 provided in an upper surface 41 of the lower die part 33.

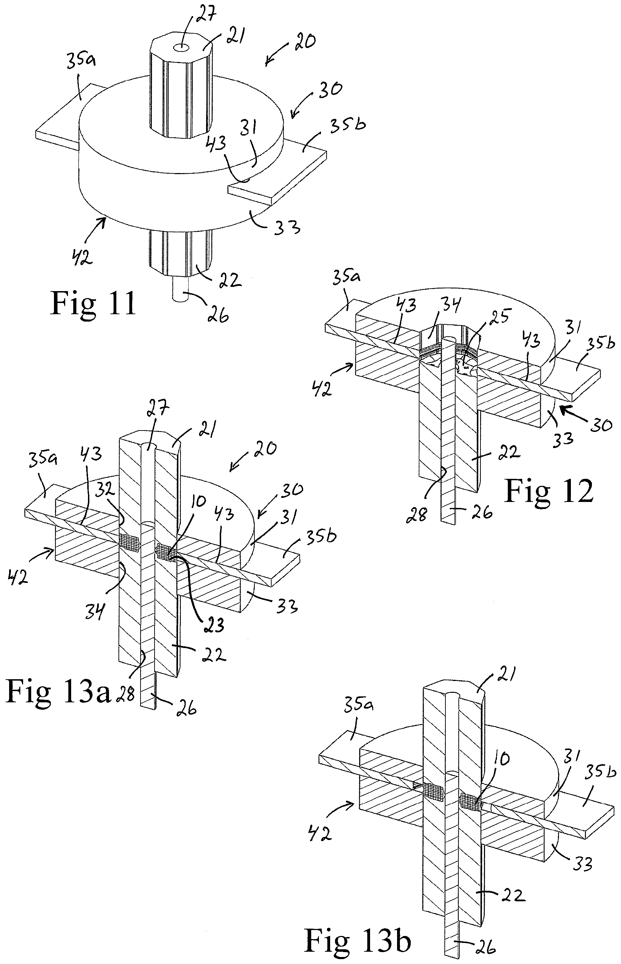

In the embodiment illustrated in Figs 11-13b, the upper and lower die parts 31, 33 are integrated with each other and together form a die block 42, wherein the intermediary die members 35a, 35b are slidably received in a respective transversal channel 43 provided in the die block 42. In this case, the cross-section of the bore 32 in the upper die part 31 is equal to or larger than the cross-section of the bore 34 in the lower die part 33 so as to allow the lower punch 22 to move upwards through the bore 32 in the upper die part 31 when the green body 10 is to be exposed.

When the green body 10 to be produced has a centre hole 13, the compacting device 20 comprises a core pin 26 for forming the centre hole 13 in the green body. In this case, the upper and lower punches 21, 22 are both provided with a central bore 27, 28 for receiving the core pin 26, wherein the central bore 27 in the upper punch 21 is aligned with the central bore 28 in the lower punch 22. The upper and lower punches 21, 22 may be provided with projecting parts which are configured to form parts of the centre hole 13 in the green body 10. The upper punch 21 may also have a part that abuts the upper end of the core pin 26.

The core pin 26 is in a conventional manner connected to an actuator (not shown), by means of which it is individually moveable upwards and downwards in the direction of the pressing axis x₂.

A possible operating sequence for producing a cutting insert green body 10 by means of a compacting device 20 of the type illustrated in Fig 5a will now be described with reference to Figs 5a-5i.

Fig 5a shows the compacting device 20 in a position in which it is set for filling of powder into a space in the die 30 above the lower punch 22. In this position, the intermediary die members 35a, 35b have been moved into the advanced position and the upper punch 21 and the upper die part 31 have been retracted upwards in order to allow a powder filling device (not shown) to be moved into the space above the opening 44 formed between the intermediary die members 35a, 35b. Furthermore, the lower punch 22 has been retracted downwards in order to provide additional space in the lower die part 33 and thereby allow the lower die part 33 and the intermediary die members 35a, 35b to receive the amount of powder required for producing the intended green body 10. During the filling of the powder, the core pin 26 is held in a position in which its upper end is flush with the upper surface of the intermediary die members 35a, 35b.

Fig 5b shows the compacting device 20 when the required amount of powder 29 has been introduced into the space above the lower punch 22. The powder 29 is for instance of metallic or ceramic material. In the next step, the upper die part 31 is moved downwards into contact with the upper surface of the intermediary die members 35a, 35b and the upper punch 21 is moved downwards into a position at a distance from the upper surface of the powder 29, as illustrated in Fig 5c. Thereafter, the core pin 26 is moved upwards into the central bore 27 in the upper punch 21, as illustrated in Fig 5d. The lower punch 22 is then moved upwards until the powder 29 completely fills the die cavity 23 formed inside the die 30 between the upper and lower punches 21, 22, as illustrated in Fig 5e. In the next step, the powder 29 is compacted so as to form the green body 10 by forcing the upper punch 21 downwards and the lower punch 22 upwards to their final compacting positions, as illustrated in Fig 5f, wherein an upper part of the green body 10 is formed by the powder compacted in the upper part 23a of the die cavity between an inner surface of the upper die part 31 and the lower end surface 24 of the upper punch 21, a lower part of the green body 10 is formed by the powder compacted in the lower part 23b of the die cavity between an inner surface of the lower die part 33 and the upper end surface 25 of the lower punch 22 and the above-mentioned undercut portion 15 is formed by the powder compacted in the intermediate part 23c of the die cavity between the intermediate die members 35a, 35b.

When the compacting of the powder has been completed, the compacting pressure on the formed green body 10 is slowly decreased by retracting the intermediate die members 35a, 35b and the upper and lower punches 21, 22 a short distance, for instance in the order of about 0.1 mm.

When the green body 10 is to be removed from the compacting device 10, the intermediary die members 35a, 35b are moved to the retracted position illustrated in Fig 5g, whereupon the upper and lower punches 21, 22 are moved upwards at the same time as the upper die part 31 is moved upwards in relation to the lower die part 33 and the upper punch 21 so as to allow the peripheral wall 12 of the green body 10 to be released from the upper and lower die parts 31, 33, as illustrated in Fig 5h. Thereafter, the lower punch 22 is moved further upwards in order to position the green body 10 above the upper surface of the intermediary die members 35a, 35b, and the core pin 26 is moved downwards in relation to the lower punch 22 in order to release the green body 10 from the core pin 26, as illustrated in Fig 5i. Furthermore, the upper punch 21 is moved upwards in relation to the lower punch 22 and the green body 10 in order to release the upper punch 21 from the green body 10. The green body 10 may now be gripped and removed from the lower punch 22, for instance by means of a robot arm or the like provided with a gripping tool. As an alternative, the green body 10 may be exposed by moving the lower die part 33 downwards in relation to the lower punch 22.

The invention is of course not in any way restricted to the embodiments and operating sequence described above. On the contrary, many possibilities to modifications thereof will be apparent to a person with ordinary skill in the art without departing from the basic idea of the invention such as defined in the appended claims. It is for instance possible to keep the lower punch 22 stationary during the compacting of the powder 29 in the die cavity 23. In the latter case, only the upper punch 21 is moved during the final compacting of the powder 29.

## Claims

1. A compacting device for producing a cutting insert green body (10) by compacting a powder, the compacting device (20) comprising:
- at least one upper punch (21);
- at least one lower punch (22);
- a die (30) configured to contribute to defining a die cavity (23) that defines the shape of the green body (10) to be formed, the die (30) comprising an upper die part (31), which is configured to define an upper part (23a) of said die cavity (23) together with the upper punch (21) and which is provided with a bore (32) for receiving the upper punch (21), and a lower die part (33), which is configured to define a lower part (23b) of said die cavity (23) together with the lower punch (22) and which is provided with a bore (34) for receiving the lower punch (22),
wherein the upper punch (21) is moveable through said bore (32) in the upper die part (31) so as to be moveable in relation to the upper die part (31) along a pressing axis (x₂), and wherein the lower punch (22) is moveable through said bore (34) in the lower die part (33) so as to be moveable in relation to the lower die part (33) in the direction of the pressing axis (x₂),
**characterized in:**
- **that** the die cavity (23) comprises an intermediary part (23c) located between said upper and lower parts (23a, 23b) of the die cavity, wherein this intermediary part (23c) of the die cavity is configured to define the shape of an undercut portion (15) which extends circumferentially around a middle part of the green body (10) to be formed and which comprises three or more peripheral indexing grooves (16) in the green body (10) to be formed; and
- **that** the die (30) comprises two or more intermediary die members (35a, 35b; 35a-35d) which are transversally moveable in relation to each other and in relation to the upper and lower die parts (31, 33) in a plane perpendicular to the pressing axis (x₂) between an advanced position, in which the intermediary die members (35a, 35b; 35a-35d) together define said intermediary part (23c) of the die cavity (23), and a retracted position, in which the intermediary die members (35a, 35b; 35a-35d) are withdrawn from the die cavity (23).

2. A compacting device according to claim 1, **characterized in:**
- **that** each intermediary die member (35a, 35b; 35a-35d) has an inner face (36) facing the pressing axis (x₂), wherein this inner face (36) comprises one or more face sections (37), each of which defining the shape of one of said indexing grooves (16) in the green body (10) to be formed; and
- **that** said inner faces (36) of the intermediary die members (35a, 35b; 35a-35d) together define said intermediary part (23c) of the die cavity (23) when the intermediary die members are in the advanced position.

3. A compacting device according to claim 2, **characterized in that** said inner face (36) of the intermediary die members (35a, 35b; 35a-35d) comprises two or more such face sections (37).

4. A compacting device according to claim 2 or 3, **characterized in that** each one of said face sections (37) extends along a straight line, or essentially straight line, as seen in a plane perpendicular to the pressing axis (x₂).

5. A compacting device according to any of claims 1-4, **characterized in that** the intermediary die members (35a, 35b) are two in number and located opposite each other on opposite sides of the pressing axis (x₂).

6. A compacting device according to any of claims 1-4, **characterized in that** the intermediary die members (35a-35d) are three or more in number and equally distributed about the pressing axis (x₂).

7. A compacting device according to any of claims 1-6, **characterized in that** the intermediary die members (35a, 35b; 35a-35d) are configured to abut against each other in the advanced position.

8. A compacting device according to any of claims 1-7, **characterized in that** the intermediary die members (35a, 35b; 35a-35d) are plate-shaped.

9. A compacting device according to any of claims 1-8, **characterized in that** the upper die part (31) is moveable in relation to the lower die part (33) and the intermediary die members (35a, 35b; 35a-35d) in the direction of the pressing axis (x₂).

10. A compacting device according to claim 9, **characterized in that** the intermediary die members (35a, 35b; 35a-35d) are slidably received in a respective guide groove (40) provided in an upper surface (41) of the lower die part (33).

11. A compacting device according to any of claims 1-8, **characterized in that** the upper and lower die parts (31, 33) are integrated with each other and together form a die block (42), wherein the intermediary die members (35a, 35b) are slidably received in a respective transversal channel (43) provided in said die block (42).

12. A compacting device according to any of claims 1-11, **characterized in:**
- **that** the compacting device (20) comprises a core pin (26) for forming an axial through hole (13) in the green body (10) to be formed; and
- **that** the lower punch (22) is provided with a central bore (28) for receiving the core pin (26).

13. A method for producing a cutting insert green body (10) having an undercut portion (15) which extends circumferentially around a middle part of the green body (10) and which comprises three or more peripheral indexing grooves (16) in the green body (10), the method comprising the steps of:
- providing a compacting device (20) comprising:
• at least one upper punch (21);
• at least one lower punch (22); and
• a die (30) which contributes to defining a die cavity (23) that defines the shape of the green body (10) to be formed, the die (30) comprising an upper die part (31), which is configured to define an upper part (23a) of said die cavity (23) together with the upper punch (21), and a lower die part (33), which is configured to define a lower part (23b) of said die cavity (23) together with the lower punch (22);
- providing the upper die part (31) with a bore (32) for receiving the upper punch (21), wherein the upper punch (21) is moveable through said bore (32) in the upper die part (31) so as to be moveable in relation to the upper die part (31) along a pressing axis (x₂); and
- providing the lower die part (33) with a bore (34) for receiving the lower punch (22), wherein the lower punch (22) is moveable through said bore (34) in the lower die part (33) so as to be moveable in relation to the lower die part (33) in the direction of the pressing axis (x₂),
**characterized in that** the method comprises the steps of:
- providing the die (30) with two or more intermediary die members (35a, 35b; 35a-35d) which are transversally moveable in relation to each other and in relation to the upper and lower die parts (31, 33) in a plane perpendicular to the pressing axis (x₂) between an advanced position, in which the intermediary die members (35a, 35b; 35a-35d) together define an intermediary part (23c) of the die cavity (23), and a retracted position, in which the intermediary die members (35a, 35b; 35a-35d) are withdrawn from the die cavity (23), wherein said intermediary part (23c) of the die cavity is located between said upper and lower parts (23a, 23b) of the die cavity and defines the shape of said undercut portion (15);
- moving the intermediary die members (35a, 35b; 35a-35d) to the advanced position;
- filling powder (29) into the die (30);
- compacting the powder (29) by forcing at least the upper punch (21) downwards against the powder (29) in the die cavity (23) to thereby form said green body (10);
- moving the intermediary die members (35a, 35b; 35a-35d) from the advanced position to the retracted position to thereby withdraw the intermediary die members (35a, 35b; 35a-35d) from the green body (10) and the die cavity (23); and
- exposing the green body (10) by moving the upper and lower punches (21, 22) upwards in relation to the lower die part (33) or by moving the lower die part (33) downwards in relation to the lower punch (22).

14. A method according to claim 13, **characterized in that** the upper die part (31) is moved upwards away from the lower die part (33) during the step of exposing the green body (10).

15. A method according to claim 13 or 14 **characterized in that** the powder (29) is compacted by simultaneously forcing the upper punch (21) downwards and the lower punch (22) upwards against the powder (29) in the die cavity (23).
